# EUROPÄISCHE PATENTSCHRIFT

(11) **EP 0 855 560 B1**
(45) Veröffentlichungstag und Bekanntmachung des Hinweises auf die Patenterteilung: **21.04.2004**
(21) Anmeldenummer: 97112976.2
(22) Anmeldetag: 29.07.1997
(51) Int. Cl.: F24F 12/00, F24F 3/16, F24F 13/28

(54) **Lüftungsvorrichtung**
Ventilation device
Dispositif de ventilation

(30) Priorität: 24.01.1997 DE 29701324 U
(43) Veröffentlichungstag der Anmeldung: 29.07.1998
(73) Patentinhaber: SIEGENIA-AUBI KG, 57074 Siegen (DE)
(72) Erfinder: Bottländer, André, 57462 Olpe (DE); Müchler, Torsten, 57258 Freudenberg (DE); Kucharczyk, Eckhard, 57234 Wilnsdorf (DE); van Well, Frank, 51063 Köln (DE); Wader, Gerhard, 58511 Lüdenscheid (DE); Wiesner, Karl, 57234 Wilnsdorf (DE)

(56) Entgegenhaltungen:
- DE-C- 3 828 011
- FR-A- 2 529 308
- FR-A- 2 533 682

## Beschreibung

Die Erfindung betrifft eine Lüftungsvorrichtung zum gleichzeitigen Be- und Entlüften von Räumen und/oder zum Kurzschlußbetrieb für die Luftumwälzung in Räumen, insbesondere mit einer Einrichtung zur Wärmerückgewinnung aus dem Entlüftungs-Medienstrom,
mit einem Gehäuse, das - beispielsweise rauminnenseitig - an oder in einer Gebäudewand angeordnet, sowie an je einen zur Außenluft führenden Lüftungskanal für den Be- und den Entlüftungs-Medienstrom anschließbar ist,
wobei innerhalb des Gehäuses zwei voneinander getrennte Strömungswege ausgebildet sind,
und wobei in beiden Strömungswegen Filterelemente vorgesehen sind.

Lüftungsvorrichtungen dieser Art sind bereits bekannt geworden durch die DE 38 28 011 C2.

Diese Lüftungsvorrichtung weist ein plattenförmiges Filterelement auf, welches zwischen der Abluftöffnung, der Frontwand und dem Durchlaß in der Wand des Luftführungs-Baukörpers vorgesehen ist.

Des Filterelement besteht aus einem biegsamen Filterwerkstoff, beispielsweise einem Filtervlies, welches einstückig hergestellt ist. Zur Montage des Filterelementes wird eine das Gehäuse verschließende Frontwand abgenommen und das Filterelement entlang von - teilweise bogenförmig gekrümmten - Stirnkanten von am Gehäuse befestigten Querstegen in eine Kammer eingeschoben.

Ein sich daran anschließender, nach außen freiliegender Längenabschnitt des Filterelementes wird parallel zur Frontplatte senkrecht nach oben geführt, so daß das Filterelement ein Zwangslüftungsgebläse U-förmig umfaßt.

Es ist dabei von Nachteil, daß ein Teil des Filterelementes keine Filterfunktion aufweist, da es weder im Belüftungsnoch im Entlüftungs-Medienstrom der Lüftungsvorrichtung liegt und daß das Filterelement auch entgegen seiner vorgesehenen Durchströmungsrichtung eingebaut werden kann, wenn der verwendete Filterwerkstoff eine dafür vorgesehene Richtung aufweist. Die Montage bzw. Wartung der Lüftungsvorrichtung ist durch die Anordnung des Filterelementes dahingehend erschwert, daß das biegsame Filterelement in dem Bereich hinter der Zwangslüftungsvorrichtung nicht eingesehen werden kann, so daß nicht gewünschte Falten od. dgl. entstehen können.

Auch ist es nicht möglich, für den Entlüftungs- und Belüftungs-Medienstrom unterschiedliche Filterelemente zu verwenden.

Der Erfindung liegt nun die Aufgabe zugrunde, eine Lüftungsvorrichtung der eingangs erwähnten Art zu schaffen, bei der das oder die Filterelemente möglichst montage- und wartungsfreundlich ausgelegt ist bzw. sind. Gleichzeitig soll die optimale Funktion des Filterelements gewährleistet sein.

Die Lösung dieses Problems wird erfindungsgemäß nach dem Kennzeichen des Anspruchs 1 dadurch erreicht, daß die Filterelemente miteinander eine Baueinheit bilden, die von einem Rahmen getragen ist, der ggf. auch die Einrichtung zur Wärmerückgewinnung trägt.

Dadurch wird erreicht, daß die Filterelemente gemeinsam - in einem Arbeitsgang - ein- und ausgebaut werden können. Auch ist eine erhöhte Stabilität der Baueinheit die Folge und Abdichtprobleme der Filterelemente zueinander entfallen.

Eine bevorzugte Ausführungsform sieht vor, daß daß die durch die Filterelemente gebildete Baueinheit einen L-förmigen Querschnitt aufweist, dessen durch ein Filterelement gebildete Schenkel zumindest nahezu senkrecht aufeinander stehen.

Für den Fall, daß die Filterelemnte unterschiedliche Dickenabmessungen aufweisen, ist vorgesehen, daß das Filterelement mit der größeren Dickenabmessung an seiner Schmalseite einer Breitseite des Filterelementes zugeordnet ist, welches die geringere Dickenabmessung aufweist.

Eine kostengünstige Herstellung ist gewährleistet, wenn die Filterelemente mittels einer Klebeverbindung verbunden sind.

Der sinnvolle und energiesparende Betrieb der Lüftungsvorrichtung ist gewährleistet, wenn zur Trennung der Medienströme die Flächenverbindung zwischen den beiden Filterelementen abgedichtet sind und dadurch Kurzschlüsse der Medienströme verhindert werden.

Weitere Merkmale und Vorteile des Gegenstandes der Erfindung werden nachfolgend an in den Zeichnungen dargestellten Ausführungsbeispielen erläutert. Hierbei zeigen
- Fig.1: eine Lüftungsvorrichtung in verkleinertem Vertikalschnitt
- Fig. 2: einen Horizontalabschnitt durch die Lüftungsvorrichtung nach Fig. 1 entlang der Linie II- II,
- Fig. 3: einen Horizontalschnitt durch die Lüftungsvorrichtung nach Fig. 1 entlang der Linie III-III,
- Fig. 4: eine schematisierte Raumform-Darstellung der Lüftungsvorrichtung mit durch schraffierte Pfeile gekennzeichnetem Belüftungs-Medienstromweg,
- Fig. 5: eine der Fig. 4 entsprechende Darstellung, jedoch mit durch offene Pfeile gekennzeichnetem Entlüftungs-Medienstromweg,
- Fig. 6: im Vertikalschnitt das Gehäuse einer Zwangslüftungsvorrichtung,
- Fig. 7: die untere Hälfte des Gehäuses nach Fig. 6 in Draufsicht gemäß Pfeilrichtung VII,
- Fig. 8: in größerem Maßstab einen Schnitt entlang der Linie VIII-VIII in Fig.7.
- Fig. 9: im Querschnitt die Einrichtung zur Wärmerückgewinnung in ausführlicher Darstellung und
- Fig. 10: einen vergrößerten Ausschnitt der Lüftungsvorrichtung nach Fig. 1.

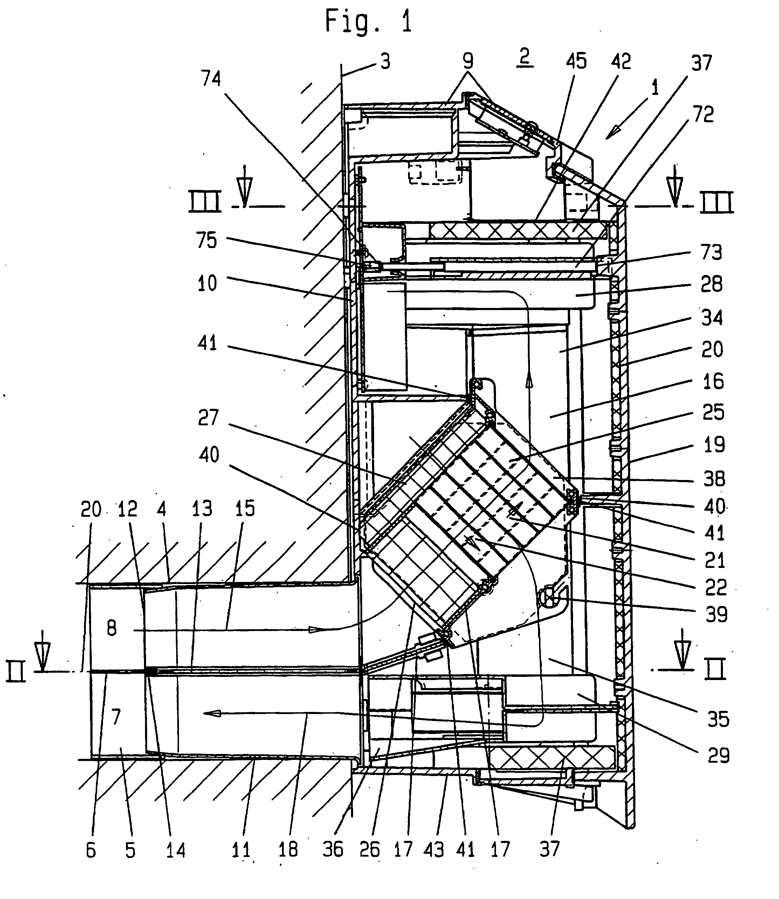

Fig. 1 der Zeichnung zeigt einen Vertikalschnitt durch eine Lüftungsvorrichtung 1 zum gleichzeitigen Be- und Entlüften eines Raumes 2. Diese Lüftungsvorrichtung 1 läßt sich, vorzugsweise rauminnenseitig, an oder in einer Gebäudewand 3 befestigen, die einen Durchbruch 4 nach außen aufweist, in den sich ein rohrförmiger Lüftungskanal 5 einsetzen läßt.

Der rohrförmige Lüftungskanal 5 hat dabei eine Trennwand 6, die zwei längsverlaufende Strömungskanäle 7 und 8 von etwa gleichem Querschnitt gegeneinander abgrenzt. Bevorzugt besitzt der Lüftungskanal 5 einen runden Querschnitt, in dem durch die Trennwand 6 die beiden Strömungskanäle 7 und 8 jeweils mit halbkreisförmigem Querschnitt vorgesehen sind.

Das Gehäuse 9 der Lüftungsvorrichtung 1 besitzt einen wannenartigen Grundkörper 10 an den ein Rohrabschnitt 11 fest, vorzugsweise aber begrenzt winkelbeweglich, angeflanscht ist, der in den Durchbruch 4 hineingesteckt werden kann. Der Rohrabschnitt 11 verjüngt sich wenigstens nahe seinem freien Ende 12 an seinem Außenumfang konisch, während eine diametrale Trennwand 13 desselben in einer sich konisch öffnenden Nut 14 endet. Durch diese Ausgestaltung des Rohrabschnitts 11 wird eine problemlose Kupplung der Lüftungsvorrichtung 1 mit dem Lüftungskanal 5 erreicht, weil der Röhrabschnitt 11 mit seinem verjüngten freien Ende 12 in den etwas größer bemessenen Lüftungskanal 5 eintauchen kann, während zugleich die Trennwand 6 des Lüftungskanals 5 in die konisch geformte Nut 14 der Trennwand 13 ragt.

Ein auf diese Art und Weise gebildeter Belüftungs-Medienstromweg 15 endet in einer Kammer 16 des Gehäuses 9, die mit einem größeren Durchströmquerschnitt versehen ist, als der Belüftungs-Medienstromweg 15 selbst. Dabei wird die Kammer 16 durch eine Trennwand 17 in den Belüftungs-Medienstromweg 15 und einen Entlüftungs-Medienstromweg 18 geteilt. Letzterer ist dabei durch den Rohrabschnitt 11 und den Lüftungskanal 5 im Durchbruch 4 der Gebäudewand 3 zur Außenluft geführt. Zur Rauminnenseite wird die Kammer 16 durch eine Frontplatte 19 begrenzt, die sich im wesentlichen quer zur Mittelachse 5a des Lüftungskanals 5 bzw. des Rohrabschnitts 11 erstreckt.

Durch diese Anordnung wird erreicht, daß jenseits der Gebäudewand 3 auftretende Schallwellen, die durch den Lüftungskanal 5 bzw. den Rohrabschnitt 11 in den Raum 2 gerichtet sind, zunächst nur bis in die Kammer 16 gelangen können. Die Querschnittsänderung (Erweiterung) bewirkt dabei eine erste Dämpfung. Die Frontplatte 19 ist - ebenso wie alle anderen Seitenwände der Kammer 16 - mit schallabsorbierendem Material 20 ausgekleidet. Zusätzlich kann vorgesehen werden, daß auf dem schallabsorbierenden Material 20 der Kammerinnenseite - nicht dargestellte - schallabsorbierende und/oder schallreflektierende Metallplatten angebracht sind, die den eindringenden Lärm dämmen,dämpfen und reflektieren. Um einen möglichst effektiven Schallabbau zu erreichen, ist dabei auch vorgesehen, daß die Frontplatte 19 aus einer nicht ebenen, z.B. konvex oder konkav gekrümmten, massiven Platte besteht. Beim Ausführungsbeispiel hat sie eine - vom Inneren der Kammer 16 aus betrachtet - nach auswärts gewölbte, also konkave Form. Dadurch werden evtl. vorhandene Eigenfrequenzen gemindert und die Schallreduzierung im Inneren der Kammer 16 begünstigt.

Beim dargestellten Ausführungsbeispiel wird die Trennwand 17 zur Abteilung des Belüftungs-Medienstromweges 15 vom Entlüftungs-Medienstromweg 18 in wesentlichen Teilen von einer Einrichtung zur Wärmerückgewinnung 25 gebildet. Bei dieser Einrichtung zur Wärmerückgewinnung 25 handelt es sich vorzugsweise um einen rekuperativ arbeitenden Wärmeübertrager, der eine Kreuzstrom-Bauart aufweist. Er besteht aus mindestens einem Lamellen- bzw. Plattenstapel 24, der aus einer größeren Anzahl von Einzellamellen bzw. - Platten 23 zusammengesetzt ist. Von diesen kann jede einen etwa C-förmigen Querschnitt aufweisen und, wie das in den Fig. 1, 4, 5 und 9 dargestellte Ausführungsbeispiel zeigt, einen etwa quadratischen Grundriß haben. Die Einzellamellen- bzw. -Platten 23 sind dabei möglichst dünnwandig ausgebildet und bestehen aus einem gut wärmeleitenden Werkstoff, beispielsweise Aluminium oder Kupfer. Die Einzellamellen bzw. - Platten 23 sind wechselseitig um eine normal zu ihrer Ebene gerichtete Achse jeweils um 90° gegeneinander verdreht aufeinandergelegt, so daß zwischen ihnen Durchströmkanäle 21 und 22 gebildet werden, die abwechselnd eine zueinander um 90° verdrehte Lage haben, damit die durch sie hindurchgeführten Luftströme sich in den in Schichtlage aufeinanderfolgenden Strömungskanälen 21 und 22 jeweils kreuzen.

Die bevorzugte und dargestellte Ausführungsform, besteht aus dünnwandigen Profilabschnitten, die wie bereits vorbeschrieben, jeweils um 90° zueinander drehwinkel-versetzt angeordnet werden. Es ist möglich, innerhalb der Einrichtung zur Wärmerückgewinnung 25 bzw. des sie bildenden Plattenstapels 24 jeweils parallel zum Medienstromweg 15, 18 verlaufende Zwischenwände vorzusehen, die die Oberfläche der Einrichtung zur Wärmerückgewinnung 25 vergrößern und somit deren Wirkungsgrad erhöhen. Durch ihre Richtfunktion können sie aber auch die Ausbildung einer laminaren Strömung begünstigen.

Der Einrichtung zur Wärmerückgewinnung 25 ist im Belüftungs-Medienstromweg 15 ein Filterelement 26 vorgeordnet, welches die in den Raum 2 eingeführte Luft von schwebenden Schmutzpartikeln befreit.

Auch im Entlüftungs-Medienstromweg 18 ist der Einrichtung zur Wärmerückgewinnung 25 ein Filterelement 27 vorgelagert, das ebenso wie das Filterelement 26, eine Verschmutzung der Einrichtung zur Wärmerückgewinnung 25 durch aus dem Raum 2 abgesaugte Schmutzpartikel verhindert. Die Filterelemente 26, 27 sind sowohl für den Belüftungs-Medienstrom 15 als auch für den Entlüftungs-Medienstrom 18 im Ansaugweg von Zwangslüftungsvorrichtungen 28 bzw. 29 angeordnet. Dadurch wird erreicht, daß sowohl in den Filterelementen 26 und 27 als auch in der Einrichtung zur Wärmerückgewinnung 25 eine laminare Strömung vorliegt, die deren vollflächige Durchströmung gewährleistet. Unterstützt wird dies durch die in der Einrichtung zur Wärmerückgewinnung 25 angebrachten, (bereits erwähnten) Zwischenwände bzw. Längsstege, weil diese für eine weitere Ausrichtung des Belüftungs- und des Entlüftungs-Medienstroms (18) sorgen.

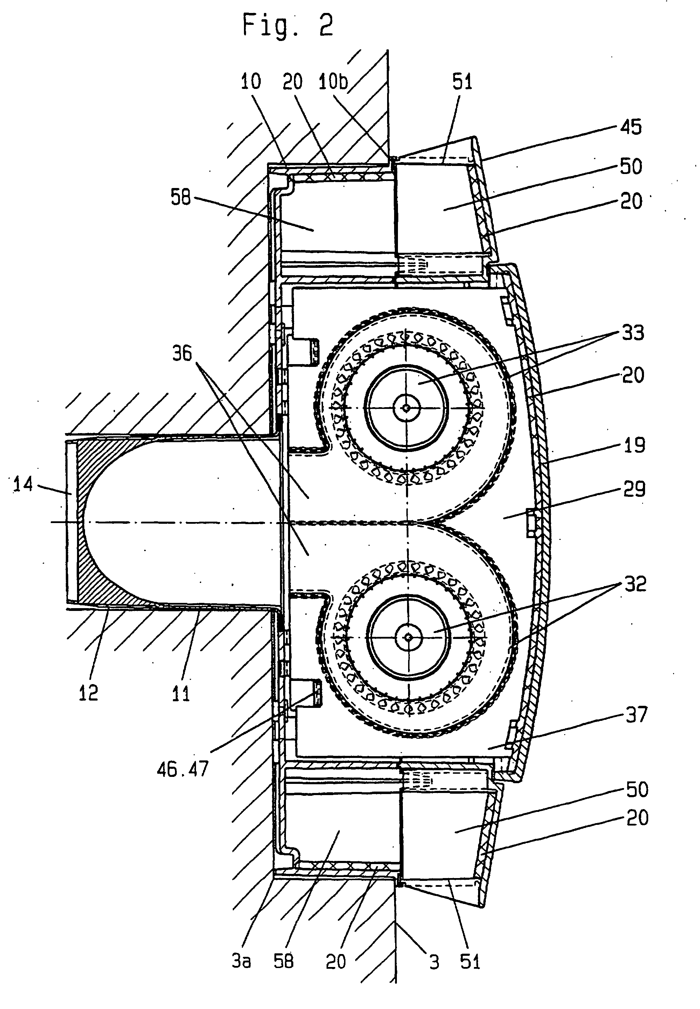

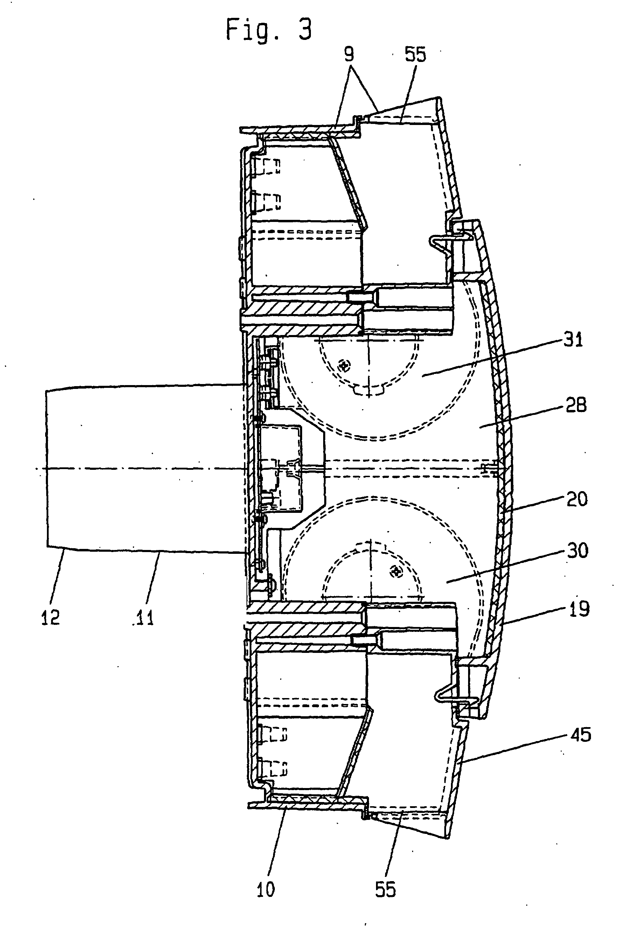

Die Zwangslüftungsvorrichtungen 28, 29 sind an den oberen, waagerechten Begrenzungswänden 42 und die Zwangslüftungsvorrichtungen 29 sind an den unteren waagerechten Begrenzungswänden 43 der Kammer 16 angeordnet, so daß sich jeweils eine größtmögliche Entfernung zu den Filterelementen 26, 27 und zu der Einrichtung zur Wärmerückgewinnung 25 ergibt. Daraus resultiert neben günstigen Strömungsverhältnissen auch eine längere Verweilzeit der Luftströmung mit der damit verbundenen besseren Erwärmung des zugeführten Belüftungs-Medienstroms 15 durch das gesamte Gehäuse 9. Wie insbesondere auch aus Fig. 2 und 3 hervorgeht, besteht jede der Zwangslüftungsvorrichtungen 28, 29 aus paarweise zusammenarbeitenden Gebläsen und zwar aus dem im Belüftungs-Medienstrom 15 angeordneten Gebläsepaar 30, 31 und dem im Entlüftungs-Medienstrom 18 angeordneten Gebläsepaar 32, 33.

Wie die Fig. 2 und 7 zeigen, sind die Gebläse 30, 31 des Belüftungs-Medienstroms 15 oben im Gehäuse 9 so angeordnet, daß sie getrennte Ausblaskanäle 60 aufweisen, jedoch einen gemeinsamen Ansaugraum 34 haben. Demgegenüber besitzen die im Entlüftungs-Medienstrom 18 und unten im Gehäuse 9 angeordneten Gebläse 32, 33 sowohl einen gemeinsamen Ansaugraum 35 als auch einen gemeinsamen Ausblaskanal 36. Der Ausblaskanal 36 ist dabei idealerweise vom Rohrabschnitt 11 gebildet. Die Zwangslüftungsvorrichtungen 28, 29 sind jeweils unmittelbar in einem blockartigen Einsatzkörper 37 gelagert, der beispielsweise aus Schaumkunststoff oder'Moosgummi gebildet ist. Dadurch werden die unvermeidlichen Eigengeräusche der Gebläse 30, 31 bzw. 32, 33 auf ein Minimum reduziert bzw. gedämmt, weil die Gebläsevibrationen nicht auf das Gehäuse 9 übertragen werden. Durch die Ausgestaltung als Doppelgebläse bzw. Gebläsepaare 30/31 bzw. 32/33 wird darüber hinaus erreicht, daß bei gleichem Volumenstrom die Gebläse 30, 31, 32, 33 mit relativ geringer Drehzahl arbeiten können. Der hiermit erzeugte Volumenstrom ist jedoch gegenüber einem üblicherweise einzusetzenden doppelt so groß bemessenen Einzel-Gebläse ungleich größer.

Die Zwangslüftungsvorrichtungen 28, 29 können in dem Gehäuse 9 schubladenartig - ohne zusätzliche Befestigungsmittel - gelagert werden. Dies wird erreicht durch Schaffung von zur Rauminnenseite offenen Fächern 48, 49 innerhalb des Gehäuses 9, in die sich die einteilig ausgebildeten Zwangslüftungsvorrichtungen 28, 29 einschieben lassen.

Die Stromversorgung der Zwangslüftungsvorrichtungen 28, 29 erfolgt, wie im folgenden noch genauer beschrieben wird, durch an der Rückwand des Gehäuses 9 angebrachte Kontaktstellen 46 die mit an den Zwangslüftungsvorrichtungen 28, 29 angebrachten Kontaktfedern 47 zusammenwirken. Sie wird also kabellos verwirklicht, , so daß die Zwangslüftungsvorrichtungen 28, 29 mühelos dem geöffneten Gehäuse 9 entnommen werden können. Die Anordnung der Kontaktstellen 46 ist dabei in ansich bekannter Art und Weise so gewählt, daß die Zwangslüftungsvorrichtungen 28, 29 nur in ordnungsgemäßer Einbaulage mit Strom versorgt werden, so daß eine evtl. mögliche Fehlmontage folgenlos bleibt.

Auch die Einrichtung zur Wärmerückgewinnung 25 kann zur Wartungszwecken aus dem Gehäuse 9 entnommen werden. Hierzu wird zunächst die schwenkbar am Gehäuse 9 gelagerte Frontplatte 19 um eine untere waagerechte Achse verschwenkt, so daß die Kammer 16 raumminnenseitig offen ist. Die Einrichtung zur Wärmerückgewinnung 25 25 ist zusammen mit den Filterelementen 26 und 27 auf einem Rahmen 38 montiert, der um eine Lagerachse 39 schwenkbar ist. Die Lagerachse 39 ist dabei als Rast-Schnappverbindung wirksam, so daß der Rahmen 38 insgesamt aus dem Gehäuse 9 entnommen werden kann. Der Rahmen 38 hat Begrenzungen 40 die im geschlossenen Zustand der Frontplatte 19 an entsprechende Dichtstellen 41 des Gehäuses 9 und der Frontplatte 19 stoßen.

Die insbesondere aus den Fig. 1, 4, 5 und 9 ersichtlichen Filterelemente 27, 26 können, unterschiedliche Ausgestaltung haben. So ist das Filterelement 26, welches im Belüftungs-Medienstrom 15 liegt, mit einem höheren Abscheidegrad ausgestattet als das Filterelement 27 für den Entüftungs-Medienstrom 18.

Die Filterelemente 26, 27 sind lösbar an dem Rahmen 38 befestigt, wobei zumindest das Filterelement 26 für den Belüftungs-Medienstrom 15 von der Einrichtung zur Wärmerückgewinnung 25 beabstandet ist. Dadurch wird erreicht, daß das gesamte Filterelement 26 durchströmt wird. Bei einer Anordnung desselben direkt auf der Einrichtung zur Wärmerückgewinnung 25 würden hingegen, die mit deren luftundurchlässigen Randabschnitten zusammentreffenden Filterabschnitte einen hohen Druckverlust mit sich bringen.

Wie aus den Horizontalschnitten der Fig. 2 und 3 hervorgeht, ist die Frontplatte 19 im Querschnitt nach außen gekrümmt ausgeführt und auf ihrer Innenseite mit Dämmaterial 20 belegt. In diesen Darstellungen ist auch zu erkennen, daß das Gehäuse 9 aus einem wannenartigen Grundkörper 10 besteht, auf dem ein Rahmen 45 lösbar befestigt ist. Alle senkrecht zur Gehäuse-Hauptebene verlaufenden Begrenzungswände des Grundkörpers 10 sind geschlossen, so daß im Bedarfsfall die Montage der Lüftungsvorrichtung 1 auch zumindest teilweise in einer - in Fig. 2 mit strichpunktierten Linien angedeuteten - Nische 3a der Gebäudewand 3 erfolgen kann. Der Rahmen 45 und der Grundkörper 10 sind über mit Dichtungen 10a versehenen Flanschen 10b verbunden und mit - nicht dargestellten - Befestigungselementen, z.B. Schrauben, aneinander befestigt.'

Bei einer Befestigung der Lüftungsvorrichtung 1 entsprechend der Fig. 2 wird der Rahmen 45 vom Grundkörper 10 gelöst. Der Grundkörper 10 wird in der Wandnische 3a befestigt und erst dann wird der Rahmen 45 bündig mit der Wandoberfläche an die Gebäudewand 3 angelegt. Der Rahmen 45 kann anschließend am Grundkörper 10 befestigt werden.

In der Horizontalschnitt-Darstellung gemäß Fig. 2 ist auch erkennbar, daß die Stromversorgung der Zwangslüftungsvorrichtung 28 über eine an der Rückwand des Gehäuses 9 befe,stigte Kontaktstelle 46 vorgenommen wird, die mit dazu passend angeordneten Kontaktfedern 47 zusammenwirkt, wie das oben bereits beschrieben ist.

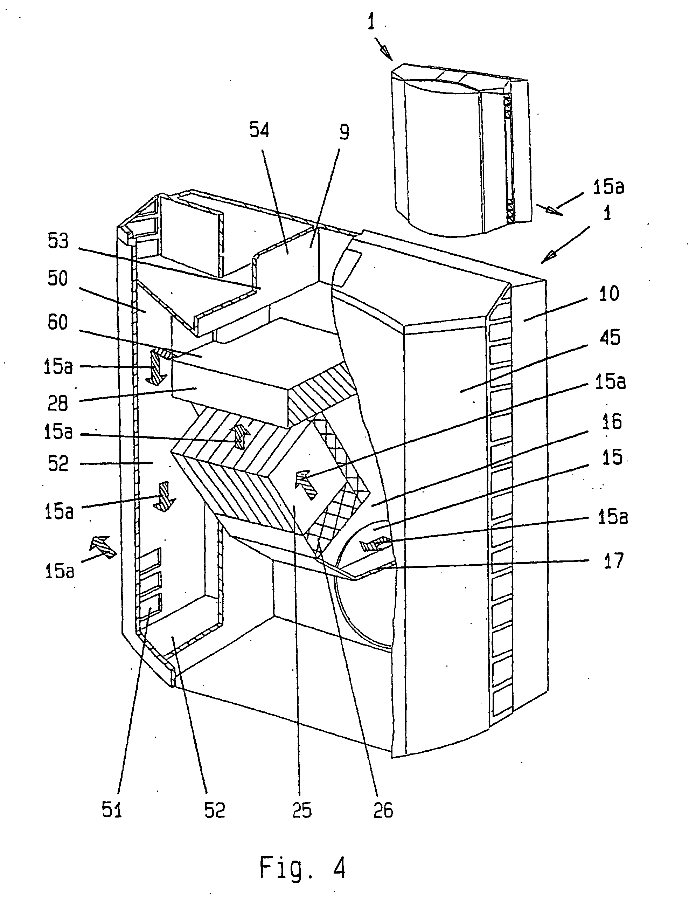

Fig. 4 zeigt den innerhalb des Gehäuses 9 vorgesehenen Verlauf des Belüftungs-Medienstromwegs 15 anhand einer Raumform-Prinzipdarstellung der Lüftungsvorrichtung 1. Der Belüftungs-Medienstrom 15 kommt dabei von dem - in dieser Darstellung nicht sichtbaren - Strömungskanal 8 im Durchbruch 4 der Gebäudewand 3 durch den ebenfalls nicht gezeigten Rohrabschnitt 11 und gelangt in die Kammer 16. Von dort aus folgt er mit einer Vielzahl von Umlenkungen einem durch die schraffierten Pfeile 15a gekennzeichneten Weg. Der Belüftungs-Medienstrom 15 wird in der Kammer 16 zunächst von dem Entlüftungs-Medienstrom 18 durch die Trennwand 17 getrennt, wonach er in Aufwärtsrichtung durch das Filterelement 26 und die Einrichtung zur Wärmerückgewinnung 25 führt. Von dort aus gelangt weiter in Aufwärtsrichtung zur Saugseite der an der oberen waagerechten Begrenzungswand 42 der Kammer 16 angeordneten Zwangslüftungsvorrichtung 27. Darin wird durch die beiden Gebläse 30 und 31 der Volumenstrom hälftig geteilt. Eine erste Hälfte des Volumenstroms wird dabei - wie gezeigt - nach links abgelenkt und in einen nach abwärts führenden Schacht 50 geleitet. Die zweite Hälfte des Volumenstroms wird in dazu spiegelsymmetrischer Richtung nach rechts geleitet, was aber in Fig. 4 nicht sichtbar ist. Am unteren Ende jedes Schachtes 50 sind seitliche Austrittsöffnungen 51 angebracht, durch die der Belüftungs-Medienstrom 15 dann in das Rauminnere gelangt.

Es ist in der Fig. 4 anhand der Pfeile 15a deutlich erkennbar, daß der Belüftungs-Medienstromweg 15 mehrfach abgeknickt verläuft und die Mehrzahl seiner Umlenkungen nahezu rechtwinklig erfolgt. Dadurch wird gewährleistet, daß von außen her eindringende, und/oder im Geräteinneren erzeugte Schallwellen weitestgehend an Energie verlieren.

Aus der Fig. 4 wird auch deutlich, daß die Einrichtung zur Wärmerückgewinnung 25 zwischen dem Filterelement 26 und der Zwangslüftungsvorrichtung 28 angeordnet ist, wodurch - wie bereits beschrieben - zuverlässig eine Verschmutzung der demgegenüber im Belüftungs-Medienstromweg 15 stromabwärts gelegenen Baugruppen verhindert wird.

Der an jeder Seite des Gehäuses 9 und außen an der Kammer 16 entlangführende Schacht 50 ist mit schallabsorbierendem Material 20 ausgekleidet, wobei eine Auskleidung an den Außenwänden 52 zur Vermeidung der Übertragung von Körperschall im allgemeinen schon ausreicht. Zu Wartungszwecken, z.B. zum Austausch des verschmutzten schallabsorbierenden Materials 20, ist der Schacht 50 durch Abnehmen des Rahmens 45 von dem Grundkörper 10 zugänglich.

Der Fig. 4 kann auch entnommen werden, daß oberhalb der durch die Wand 53 und die nach oben geschloßen ausgeführte Zwangslüftungsvorrichtung 28 abgetrennten Kammer 16 eine zweite Kammer 54 etwa mittig im Gehäuse 9 entsteht. Hierin können die zur Steuerung bzw. Regelung der Lüftungsvorrichtung 1 notwendigen elektrischen Bauteile sowie auch die Bedien- und Anzeigeinstrumente angeordnet werden, welche aber nicht dargestellt sind.

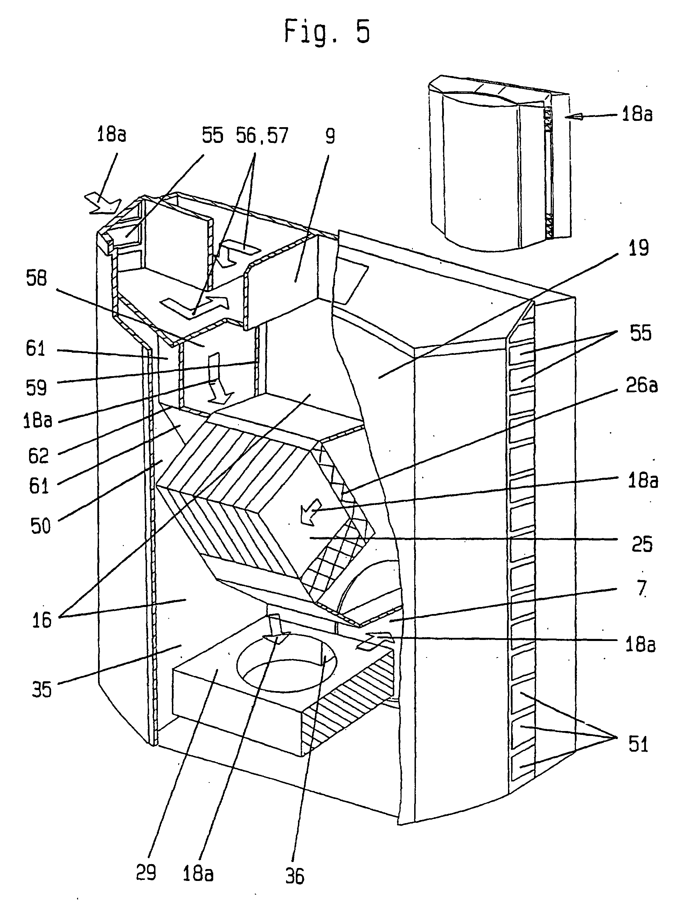

In Fig. 5 ist der innerhalb des Gehäuses 9 vorgesehene Verlauf des Entlüftungs-Medienstroms 18 ebenfalls in einer Raumform-Prinzipdarstellung erkennbar. Er führt über Lüfteintrittsöffnungen 55 oben in das Innere des Gehäuses 9, wie die offenen Pfeile 18a deutlich machen. Mit zwei folgenden rechtwinkligen Abwinkelungen 56, 57 geht er in einen senkrechten Schacht 58, der hinter dem Schacht 50 angeordnet ist, also ebenfalls außen an der Kammer 16 entlang geführt. Der in dieser Darstellung geschnittene Schacht 58 mündet an den lotrecht verlaufenden Begrenzungswänden 59 durch - hier nicht sichtbare - Öffnungen in die Kammer 16 ein. Das Filterelement 27 zum Schutz der im Entlüftungs-Medienstromweg 18 nachfolgend angeordneten Einrichtung zur Wärmerückgewinnung 25 wird von der Rückwand des Gehäuses 9 aus zur Frontplatte 19 hin durchströmt, wobei der Entlüftungs-Medienstrom 18 in den Ansaugraum 35 unterhalb der Trennwand 17 gelangt. Der Entlüftungs-Medienstromweg 18 führt hieraus - durch die Zwangslüftungsvorrichtung 29 angetrieben - in den Strömungskanal 7 der die Lüftungsvorrichtung 1 mit der Außenluft verbindet.

Die Fig. 5 macht durch die Pfeile 18a deutlich, daß auch der Entlüftungs-Medienstrom 18 an mehreren Stellen - zumeist rechtwinklig - abgeknickt verläuft. Die Zwangslüftungsvorrichtung 29 ist so angeordnet, daß der Ausblaskanal 36 beider Gebläse 32 und 33 parallel zur Mittelachse 5a des - hier nicht sichtbaren - Lüftungkanals 5 verläuft.

Wie bereits erwähnt worden ist, zeigen die Fig. 4 und 5 jeweils lediglich die eine Hälfte des Belüftungs-Medienstroms 15 und des Entlüftungs-Medienstroms 18, wobei dessen zweite Hälfte spiegelbildlich zur lotrechten Mittelebene des Lüftungsgerätes 1 geführt ist.

Aus den Fig. 4 und 5 wird auch die unterschiedliche Anordnung der Zwangslüftungsvorrichtung 28 für den Belüftungs-Medienstrom 15 und der Zwangslüftungsvorrichtung 29 für den Entlüftungs-Medienstrom 18 deutlich. Während die Ausblaskanäle 60 der Zwangslüftungsvorrichtung 28 voneinander wegweisen - zur Schmalseite des Gehäuses 9 hin -, sind die Ausblaskanäle 36 der Zwangslüftungsvorrichtung 29 richtungsgleich nebeneinander vorgesehen.

Bei der Betrachtung der Fig. 4 und 5 wird auch erkennbar, daß die Zwangslüftungsvorrichtungen 28, 29 sowohl im Belüftungs-Medienstrom 15 als auch im Entlüftungs-Medienstrom 18 eine Anordnung haben, bei der der Ansaugweg derselben - innerhalb des Gehäuses 9 der Lüftungsvorrichtung 1 - jeweils länger bemessen ist als der Ausblasweg. Mit dieser Anordnung wird erreicht, daß die beim Betrieb der Zwangslüftungsvorrichtungen 28, 29 entstehenden Eigengeräusche der Gebläse 30, 31 und 32, 33 eine maximale Dämpfung erfahren.

Der Grundkörper 10 und der Rahmen 45 des Gehäuse 9 sind als Kunststoff-Spritzgußteile ausgeführt, wodurch sich eine maßgenaue und preisgünstige Herstellung ergibt. Um das Entformen des Grundkörpers 10 ermöglichen ist die Wand 61 des Schachtes 58 bzw. des Schachtes 50 lose ausgeführt, d.h. die Wand 61 wird erst bei der Montage des Rahmens 45 auf dem Grundkörper 10 eingesetzt. Dies ermöglicht somit auch eine Reinigung der im Entlüftungs-Medienstromweg 18 gelegenen Strömungskanäle, die nicht direkt zugänglich sind. Eine bevorzugte Ausführung sieht dabei vor, daß die Wand 61 aus einem paßgenauen, mit Schalldämmaterial allseitig umschlossenen und mit einer Knickfalte 62 versehenen Pappabschnitt besteht. Dieser kann bei einer evtl. Wartung des Gerätes einfach aus diesem entnommen und durch einen neuen Abschnitt ersetzt werden.

Die bevorzugte Ausführung aller anderen Schalldämmauskleidungen innerhalb der Medienstromwege ist auf übereinstimmende Art und Weise vorgenommen.

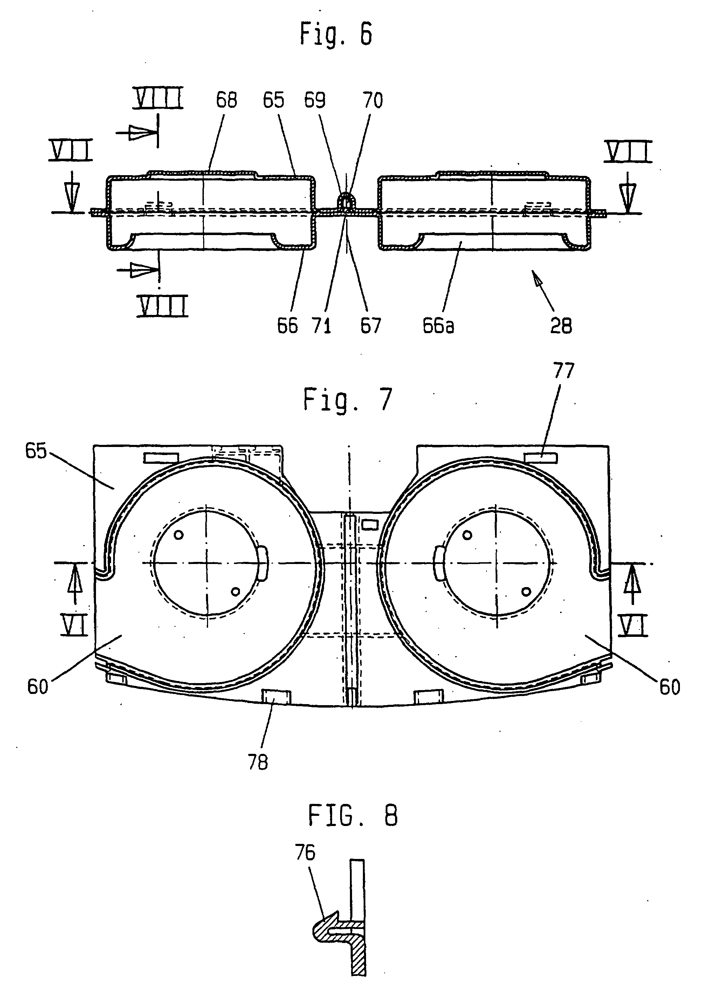

Die Fig. 6 und 7 zeigen das Ausführungsbeispiel der Zwangslüftungsvorrichtung 28 ohne die elektrischen Antriebe und ohne Lüfterräder der Gebläse 32, 33. Die Zwangslüftungsvorrichtung 28 besteht dabei aus einer oberen und einer unteren Gehäusehälfte 65, 66. Dabei sind die Gehäusehälften 65, 66 zu ihrer Quermittelachse 67 symmetrisch ausgebildet. Die - nicht dargestellten - Gebläsemotoren werden auf dem Boden 68 der oberen Gehäusehälfte 65 befestigt. Die als Radiallüfter ausgebildeten Gebläse 32 und 33 saugen über die Öffnung 66a an und blasen seitlich aus, wobei die Ausblasrichtungen spiegelsymmetrisch zur Quermittelachse 67 und voneinander weg verlaufen.

Längs der Quermittelachse 67 verläuft eine Führung 69, die durch eine oben offene Nut 70 in der oberen Gehäusehälfte 65 und durch einen Vorsprung 71 an der unteren Gehäusehälfte 66 gebildet wird. In dieser Führung 69 ist, wie dies Fig. 1 zeigt, eine Schubstange 72 längsverschiebbar geführt, welche am einen Ende 73 mit der Frontplatte 19 zusammenwirkt, während sie mit dem anderen Ende 74 auf einen Tastschalter 75 trifft. Durch diese Anordnung wird die gesamte Stromzufuhr der Lüftungsvorrichtung 1 unterbrochen, wenn die Frontplatte 19 zu Wartungszwecken geöffnet wird.

Die Fixierung der unteren Gehäusehälfte 66 auf der oberen Gehäusehälfte 65 erfolgt durch an die oberen Gehäusehälfte 65 angeformte Rasthaken 76, wie sie Fig. 8 zeigt. Diese Rasthaken 76 greifen im montierten Zustand in Ausnehmungen 77 und verriegeln eine Schwenklagerung. Diese wird durch seitlich offene Längsösen 78 der unteren Gehäusehälfte 66 und in diese eingreifende Lappen der oberen Gehäusehälfte 65 die hier nicht dargestellt ist, gebildet.

Die Zwangslüftungsvorrichtung 29 ist in dazu äquivalenter Weise ausgestattet. Sie weist jedoch nicht die Führung 69 auf und besitzt die bereits beschriebene, andere Ausblasrichtung.

Beide Zwangslüftungsvorrichtungen 28 und 29 sind, wie mehrfach hervorgehoben ist, durch zumindest eine teilweise Umhüllung mit Schalldämmaterial zur Vermeidung von Körperschallübertragungen ausgestattet.

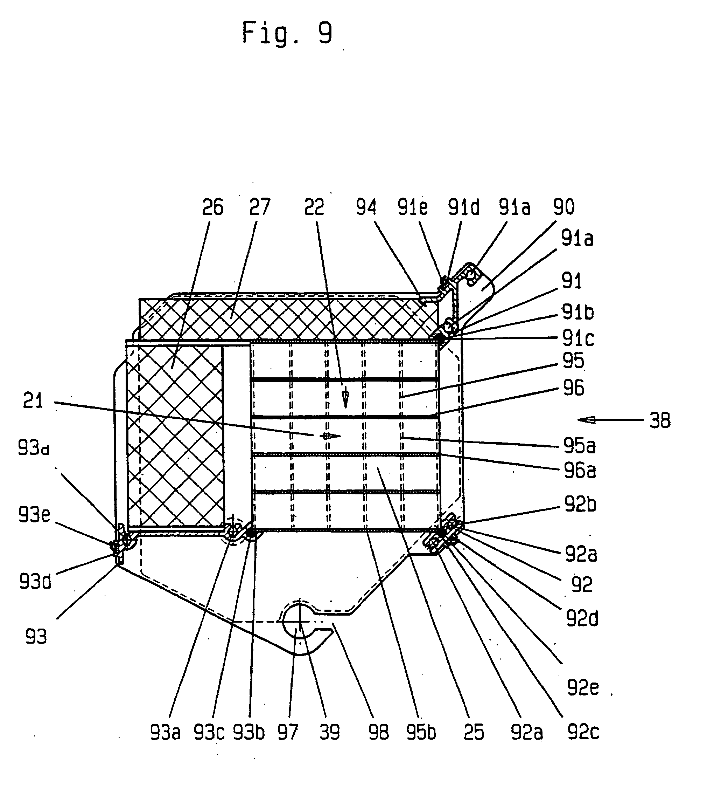

Fig. 9 zeigt die Einrichtung zur Wärmerückgewinnung 25 in einem Querschnitt und in allen Einzelheiten. Zwischen zwei Seitenwangen 90 sind Profilstäbe 91, 92, 93 durch - hier nicht dargestellte - Befestigungsschrauben befestigt, die in Schraubkanäle 91a, 92a und 93a eindringen. Der Profilstab 91 weist einen hakenförmigen Arm 94 auf, mit dem das Filterelement 27 an dem Rahmen 38 befestigt ist. Das Filterelement 26 wird durch den Profilstab 93 und das Filterelement 27 gehalten. Die Einrichtung zur Wärmerückgewinnung 25 selbst besteht, wie bereits oben beschrieben ist, aus den jeweils um 90° zueinander verdreht angeordneten Profilabschnitten 95, 96, wobei jeder Profilabschnitt 95, 96 längsverlaufende Stege 95a, 96a besitzt. Die Profilabschnitte 95, 96 werden über den von den Profilstäben 91, 92, 93 und den Seitenwangen 90 gebildeten Rahmen 38 dadurch befestigt, daß ihre Seitenkanten in Längsnuten 91b, 92 und 93b der Profilstäbe 91, 92, 93 einsitzen. Zusätzlich sind hier Dichtungen 91c, 92c und 93c angebracht.

Die Profilstäbe 91, 92, 93 weisen auch noch in Längsnuten 91d, 92d, 93d einsitzende Dichtungen 91e, 92e, 93e auf, die in bekannter Art und Weise mit den bereits weiter vorne anhand der Fig. 1 erwähnten Dichtstellen 41 des nicht dargestellten Gehäuses bzw. Frontplatte 19 zusammenwirken.

Die Seitenwangen 90 sind im dargestellten Ausführungsbeispiel mit einem Bohrung 97 versehen, an das sich eine seitliche Öffnung 98 anschließt. Der Mittelpunkt der Bohrung 97 bildet dabei eine Lagerachse 39, um die, wie bereits beschrieben, der gesamte Rahmen 38 schwenkbar gelagert ist. Die Lagerachse 39 im Gehäuse 9 kann durch einen endnah an seinen Mantelflächen abgeflachten Zylinderstab gebildet werden, der etwa den Durchmesser 99 des Loches 97 besitzt. Im Bereich der Abflachungen entspricht sein Querschnitt etwa der Breite 98a der Öffnung 98, wodurch auf einfache Weise eine Art Bajonettverschluß entsteht, über den der Rahmen 38 in dem Gehäuse 9 unverrückbar befestigt werden kann.

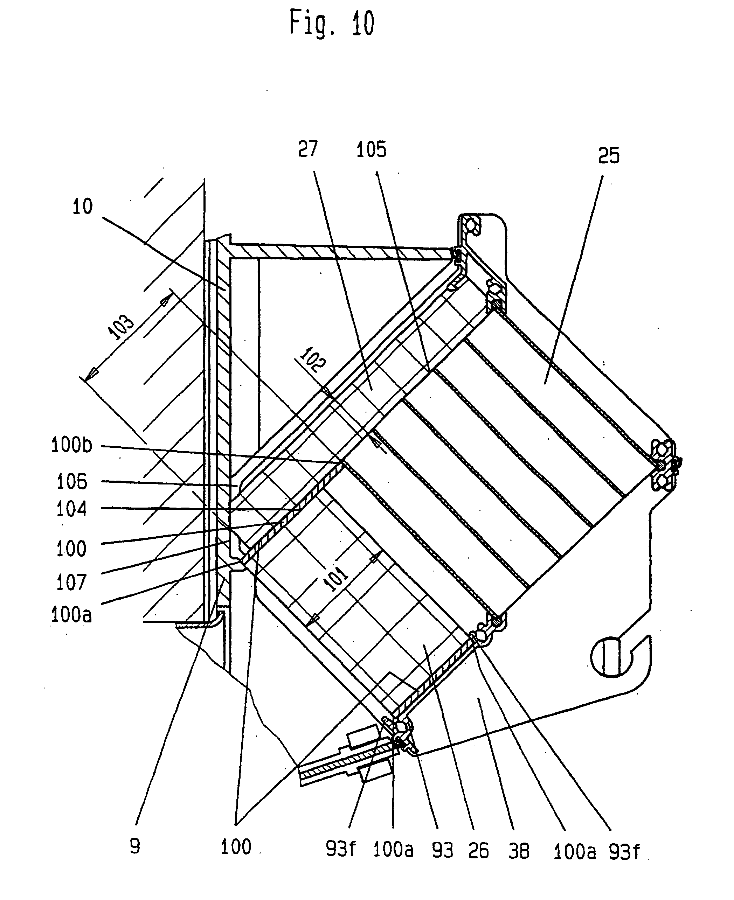

Die Fig. 10 zeigt den Rahmen 38 im Gehäuse 9. Die Filterelemente 26, 27 werden, wie bereits beschrieben, von dem Rahmen 38 getragen, der ebenfalls die Einrichtung zur Wärmerückgewinnung 25 aufnimmt.

Die Filterelemente 26, 27 sind fest miteinander verbunden und zwar über eine zwischen ihnen'wirksame Klebverbindung. Diese Klebverbindung wirkt über die gesamte Breite der Filterelemente 26, 27 und führt dazu, daß die Filterelemente 26, 27 eine Baueinheit bilden.

Diese Baueinheit besitzt einen L-förmigen Querschnitt dessen Schenkel durch die Filterelmente 26, 27 gebildet werden, die zumindest nahezu senkrecht aufeinander stehen. Dadurch wird erreicht, daß die Filterelemente 26, 27 nach dem Verschwenken des Rahmens 38 zusammen in einem Arbeitsgang dem Rahmen 38 entnommen werden können. Der L-förmige Querschnitt der Baueinheit umgreift dabei die Einrichtung zur Wärmerückgewinnung 25 an zwei Seiten, wobei durch die feste Verbindung der Filterelmente 26, 27 auch eine sichere und beabstandete Befestigung des Filterelmentes 26 gegenüber der Einrichtung zur Wärmerückgewinnung 25 gewährleistet ist.

Das Filterelement 26 besteht im Ausführungsbeispiel aus einem plissierten Filterwerkstoff, der von einem umlaufenden Rahmen 100 umschlossen ist. Als Rahmenwerkstoffe kommen dabei z.B. Pappe oder Metall in Frage.

Das Filterelement 27 besteht im Ausführungsbeispiel aus einer durch ein Vlies gebildeten Filtermatte. Der Rahmen 100 stützt bzw. hält das Filterelement 26 einerseits mit seinen umlaufenden Kanten 100a, 100b zwischen den Längskanten 93f des Profilstabs 93. Andererseits wird der Rahmen 100 mit einer über die Ebene des Filterelementes 26 vorstehenden Kante 100b gegen die Einrichtung zur Wärmerückgewinnung 25 und die rückseitigen Wand des Grundkörpers 10 abgestützt.

Die Verbindung der Filterelemente kann selbstverständlich auch lösbar ausgebildet sein, wobei das Filterelement 27 beispielsweise mittels eines aufgebrachten Klettverschlusses am Filterelement 26 gehalten ist.

Wesentlich einfacher ist jedoch die Ausgestaltung der Verbindung als eine direkt zwischen beiden Filterelementen 26, 27 wirkende Klebeverbindung. Eine Beeinflussung des Belüftungs- bzw. Entlüftungsmedienstroms 15, 18 wird in beiden Ausführungen durch den luftundurchlässigen Rahmen 100 unterbunden.

Werden die Filterelemente 26, 27 ungleich ausgelegt und weisen sie ungleichmäßige Dickenabmessungen 101, 102 auf, dann ist es zur Erzielung eines größeren Überlappungsbereiches 103 sinnvoll, daß das Filterelement 26 mit der größeren Dickenabmessungen 101 an seiner Schmalseite 104 einer Breitseite 105 des Filterelementes 27 zugeordnet ist, welches die geringere Dickenabmessung 102 aufweist. Dadurch wird der Überlappungsbereich 103 maximiert und die Verbindung erhält eine größtmögliche Ausdehnung. Auch wird erreicht, daß die aus den Filterelementen 26, 27 bestehende Baueinheit eine in sich stabile Struktur erhält, die eine größere Formstabilität als die Einzelkomponenten besitzt.

Selbstverständlich können auch andere Verbindungsarten verwendet werden, wenn die Materialien der Filterelemente 26, 27 dies ermöglichen oder verlangen.

Wie die Fig. 10 in Verbindung mit der Fig. 9 zeigt, besitzt der Rahmen 38 im Betriebszustand eine relativ zum Gehäuse geneigte Einbaulage. Der am Scheitel bei den Filterelementen 26 und 27 gelegene Eckbereich 106 ist mit einer Fase 107 versehen, die im Betriebszustand der Lüftungsvorrichtung 1 parallel zur rückseitigen Wand des Grundkörpers 10 verläuft. Da das Filterelement 27 über diese zurückspringende Fase 107 hinausragt - wie Fig. 9 zeigt - wird das Material des Filterelementes 27 im eingebauten Zustand bis auf Höhe der zurückspringenden Fase 107 verformt und wirkt als Dichtung mit der rückseitigen Wand des Grundkörpers 9 zusammen.

Gleichzeitig führt dieser Kontakt dazu, daß die aus den Filterelementen 26 und 27 bestehende Baueinheit an die Einrichtung zur Wärmerückgewinnung 25 bzw. den Rahmen 38 gepreßt wird.

Dadurch wird einerseits die aus den Filterelementen 26 und 27 gebildete Baueinheit auf dem Rahmen 38 gesichert, andererseits werden evtl. Abdichtungsprobleme sowie ggf.. auftretende Schwingungen des Rahmens (38), die zu Geräuschbelästigungen führen könnten, wirkungsvoll gedämpft.

Die den L-förmigen Querschnitt aufweisende Baueinheit ist, wie aus Fig. 10 hervorgeht, im Betriebszustand der Lüftungsvorrichtung 1 so geneigt, daß der Winkel welcher von dem Schenkel des L-förmigen Querschnitts eingeschlossen wird, von der Waagerechten halbiert wird. Als Folge davon werden die durch die Verformung des Filterelementes 27 bewirkten Kräfte gleichmäßig auf beide Filterelemente 26, 27 und den Rahmen 38 übertragen.

Das Wechseln der Filterelemente 26, 27 geschieht - wie bereits vorstehend beschrieben - durch Verschwenken des Rahmens 38 um die Lagerachse 39 bei geöffneter Frontplatte 19 wobei zu Reinigungszwecken bzw. zum Wechseln der durch die Filterelemente 26, 27 gebildeten Baueinheit der gesamte Rahmen 38 dem Gehäuse 9 der Lüftungsvorrichtung 1 entnommen werden kann.

Die Anordnung der Filterelemente 26, 27 als Baueinheit bewirkt auch, daß einer falschen Durchgangsrichtung der Medienströme durch diese entgegengewirkt wird.

Durch die gewählte Ausbildung kann die Anordnung der Filterelemente 26, 27 nur in der vorgesehenen Art und Weise erfolgen, wobei der Rahmen 38 auch einen spiegelbildliche Anordnung mit der daraus resultierenden Verwechslung der Filterelemente 26, 27 aufgrund ihrer Abmessungen nicht erlaubt.

Die unterschiedlichen Dickenabmessungen 102, 103 der Filterelemente 26, 27 bedingt nicht, daß die Filterelemente 26, 27 unterschiedliche Absorbierungs- bzw. Abscheidungsgrade aufweisen.

## Patentansprüche

1. Lüftungsvorrichtung zum gleichzeitigen Be- und Entlüften von Räumen und/oder zum Kurzschlußbetrieb für die Lüftumwälzung von Räumen,
insbesondere mit einer Einrichtung zur Wärmerückgewinnung (25) aus dem Entlüftungs-Medienstrom (18),
mit einem Gehäuse, das - beispielsweise rauminnenseitig - an oder in einer Gebäudewand (3) angeordnet, sowie an je einen zur Außenluft führenden Lüftungskanal (5) für den Belüftungs-Medienstrom (5) und den Entlüftungs-Medienstrom (18) anschließbar ist,
wobei innerhalb des Gehäuses zwei voneinander getrennte Strömungswege ausgebildet sind,
und wobei in beiden Strömungswegen Filterelemente (26, 27) vorgesehen sind,
**dadurch gekennzeichnet,**
**daß** die Filterelemente (26, 27) miteinander eine Baueinheit bilden, die von einem Rahmen (38)
getragen ist, der ggf. auch die Einrichtung zur Wärmerückgewinnung (25) trägt.

2. Lüftungsvorrichtung nach Anspruch 1,
**dadurch gekennzeichnet,**
**daß** die durch die Filterelemente (26, 27) gebildete Baueinheit einen L-förmigen Querschnitt aufweist, dessen durch je ein Filterelement (26, 27) gebildete Schenkel zumindest nahezu senkrecht aufeinander stehen.

3. Lüftungsvorrichtung nach einem der Ansprüche 1 und 2,
**dadurch gekennzeichnet,**
**daß** die Filterelemente ungleiche Dickenabmessungen (26, 27) aufweisen,
und **daß** das Filterelement (26) mit der größeren Dickenabmessung (102, 103) mit einer seiner Schmalseiten (104) einer Breitseite (105) des dünneren (103) Filterelementes (27) zugeordnet ist.

4. Lüftungsvorrichtung nach einem der Ansprüche 1 bis 3,
**dadurch gekennzeichnet,**
**daß** die Filterelemente (26, 27) mittels einer Klebeverbindung (100) verbunden sind.

5. Lüftungsvorrichtung nach einem der Ansprüche 1 bis 4,
**dadurch gekennzeichnet,**
**daß** zur Trennung der Medienströme die Flächenverbindung zwischen den beiden Filterelementen (26, 27) abgedichtet ist.

## Claims

1. Ventilation device for simultaneously letting air into and out of rooms and/or for short-circuit operation for the circulation of air in rooms,
in particular having a device for recovery of heat (25) from the outlet media flow (18),
having a housing which - for example, on the inside of the room - is disposed on or in a building wall (3) and can be connected to a respective ventilation duct (5) leading to the external air for the inlet media flow (5) and for the outlet media flow (18),
wherein two mutually separated flow paths are formed inside the housing, and wherein filter elements (26, 27) are provided in the two flow paths,
**characterised in that**
the filter elements (26, 27) form a constructional unit with each other, which is supported by a frame (38) which possibly also supports the device for heat recovery (25).

2. Ventilation device as claimed in claim 1,
**characterised in that**
the constructional unit formed by the filter elements (26, 27) has a L-shaped cross-section, the limbs of which, formed by a respective filter element (26, 27), are at least approximately perpendicular to each other.

3. Ventilation device as claimed in any one of claims 1 and 2,
**characterised in that**
the filter elements have unequal thickness dimensions (26,27),
and that the filter element (26) with the larger thickness dimension (102, 103) is allocated with one of its narrow sides (104) to abroad side (105) of the thinner (103) filter element (27).

4. Ventilation device as claimed in any one of claims 1 to 3,
**characterised in that**
the filter elements (26, 27) are connected by means of an adhesive connection (100).
Ventilation device as claimed in any one of claims 1 to 4,
**characterised in that**
in order to separate the media flows the surface connection between the two filter elements (26,27) is sealed.

## Revendications

1. Dispositif d'aération pour l'aération et la désaération simultanée de pièces et / ou le fonctionnement en bouclage local pour la circulation d'air, en particulier avec un dispositif de récupération de chaleur (25) à partir du flux d'agent de désaération (18), avec un boîtier disposé - par exemple du côté intérieur de la pièce - contre ou dans une paroi d'immeuble (3) et pouvant être raccordé à un canal d'aération pour le flux d'agents d'aération (5) et le flux d'agents de désaération (18) menant vers l'air extérieur,
deux voies d'écoulement séparées l'une de l'autre ayant été conçues à l'intérieur du boîtier,
et des éléments de filtre (26, 27) ayant été prévus dans les deux voies d'écoulement,
et **caractérisé en ce que**
les éléments de filtre (26, 27) forment ensemble une unité structurale supportée par un cadre qui, le cas échéant, supporte aussi le dispositif de récupération de chaleur (25).

2. Dispositif d'aération selon la revendication 1, **caractérisé en ce que**
l'unité structurale formée par les éléments de filtre (26, 27) forment une section transversale en forme de L, dont les montants formés chacun par un élément de filtre (26, 27) reposent au moins presque verticalement les uns sur les autres.

3. Dispositif d'aération selon une des revendications 1 ou 2, **caractérisé en ce que**
les éléments de filtre présentent des épaisseurs (26, 27) différentes et **en ce que**
l'élément de filtre (26) présentant la plus grande épaisseur (102, 103) est, avec un de ses côtés étroits (104), raccordé à un côté large (105) de l'élément de filtre (27) plus fin (103).

4. Dispositif d'aération selon une des revendications 1 à 3, **caractérisé en ce que**
les éléments de filtre (26, 27) ont été raccordés à l'aide d'une liaison par collage (100).

5. Dispositif d'aération selon une des revendications 1 à 4, **caractérisé en ce que**
le joint face à face situé entre les deux éléments de filtre (26, 27) a été obturé.
